# EUROPÄISCHE PATENTANMELDUNG

(11) **EP 3 147 038 A1**
(43) Veröffentlichungstag der Anmeldung: **29.03.2017**
(21) Anmeldenummer: 15186823.9
(22) Anmeldetag: 25.09.2015
(51) Int. Cl.: B07C 3/00

(54) **VERTEIL- UND SORTIERZENTRUM FÜR SORTIERGUT SOWIE VERFAHREN ZUM BETREIBEN EINES VERTEIL- UND SORTIERZENTRUMS FÜR SORTIERGUT**

(71) Anmelder: Siemens Aktiengesellschaft, 80333 München (DE)
(72) Erfinder: Ewert, Holger, 71032 Böblingen (DE); Tophoven, Uwe, 78462 Konstanz (DE); Wei, Xiao, Dr., 78467 Konstanz (DE)
(74) Vertreter: Maier, Daniel Oliver

(57) **Zusammenfassung**

Die Erfindung offenbart ein Verteil- und Sortierzentrum für Sortiergut sowie ein Verfahren zum Betreiben eines Verteil- und Sortierzentrums, umfassend:
a) eine Anzahl von Annahmestellen für Sortiergut;
b) eine Anzahl von Ausgabestellen für Sortiergut;
c) eine Anzahl von Sortieranlagen für die Förderung und Sortierung des an den Annahmestellen angelieferten Sortierguts und für die Abgabe des so sortierten Sortierguts an die Ausgabestellen für das so sortierte Sortiergut;
d) eine Anlagensteuerung, die ein Andocken von Sortiergutquellen an den Annahmestellen und/oder von Sortiergutsenken an den Ausgabestellen in Abhängigkeit von mindestens zwei für den Sortierprozess relevanten Faktoren steuert, wobei für den Sortierprozess relevante Faktoren folgende Daten sind:
i) Güterspezifische Daten, wie Zustellort, Gewicht, Grösse der Verpackung, Verpackungsart, erforderliche Sortieranlagenart;
ii) Daten zur Servicequalität für eines oder mehrere Sortierstücke des Sortiergut;
iii) Daten zu der aktuellen und ggfs. zukünftigen Auslastung der Anzahl von Sortieranlagen;
iv) Daten zur aktuellen und ggfs. zukünftigen Auslastung der Anzahl von Annahmestellen und/oder Ausgabestellen;
v) Daten zur Ankunft von Sortiergutquellen und der von den Sortiergutquellen angelieferten Sortierstücke; und
vi) Daten zur bereitstehenden oder zukünftigen Kapazität von Sortiergutsenken zur Aufnahme von im Zentrum sortierten Sortierstücken.

## Beschreibung

Die Erfindung bezieht sich auf ein Verteil- und Sortierzentrum für Sortiergut sowie ein Verfahren zum Betreiben eines Verteil- und Sortierzentrums für Sortiergut.

In Verteil- und Sortierzentrum für Postsendungen und/oder Paketstückgut - nachfolgend allgemein als Sortiergut bezeichnet - besteht ein grosses Bedürfnis den Entladeprozessvon Sortiergut in ankommenden/wartenden Transportbehälter (Wechselbrücke(WB) /ULD /Rollcontainer /Sack,...) oder Transporter (LKW,...) zu den jeweiligen Eingangsstellen des Zentrums, z.B. an dessen als Annahmestellen dienenden Endladetore, die z.B. über Förderbänder mit diversen innerbetrieblichen Bearbeitungssystemen und - Prozessen verbunden sind, unter Berücksichtigung sowohl der Produktionssituation in Hub als auch der Sendungsmerkmalen zu steuern. Dieser Entladeprozess wird als Pull-Prozess bezeichnet. Das Ziel ist es dabei die involvierten Systeme, insbesondere die zur Verfügung stehenden Sortieranlagen, und Prozesse wirtschaftlich einzusetzen und das ankommende Sortiergut (Sendungen) nach seinem vereinbarten Service Level zeitgerecht zu bearbeiten, damit der Nutzwert des gesamten Zentrums möglichst optimal ausgeschöpft wird.

Um den Pull-Prozess der Sendungen optimal zu planen und zu steuern, müssen sendungsbezogene Merkmale (Produkttypen, physische Größe, Zielverteilung, zeitliche Priorität usw.) und die innerbetriebliche Situation im Pull-Prozess in Betracht bezogen werden, damit folgende Probleme gelöst werden oder der beste Kompromiss zur Lösung dieser Problemen gefunden wird:
So ist beispielsweise das Problem zu lösen, wie die Sendungsbearbeitung nach vereinbartem "Servicelevel" (z.B. zeitliche Priorität, zugesichertes Auslieferungsdatum beim Adressaten) sichergestellt werden kann und/oder wie ein ausreichendes Sendungsvolumen für (unterschiedliche) nachfolgende Systeme, z.B. Paketsorter, Flyersorter, zur Verfügung gestellt werden kann. Weiter ist zu betrachten, wie der Einfluss einer temporären Unterbrechung der Sendungszuführung, die z.B. durch Wechsel von Container/LKW/WB/ULD verursacht wird, minimiert werden und/oder wie die Zuflussintensität von Sendungen durch eine optimierte Mischung/Verteilung der Paketgrössen auf einen Förderband erhöht werden kann. Außerdem gilt es Schieflasten in den angeschlossenen Sortieranlagen (z.B. im Fall einer Konfiguration von Kreisloop mit mehr als einer Eingabestellen und einer Vielzahl von Sortierbereichen) zu vermeiden oder wenigstens zu minimieren.

Zur Lösung dieser Probleme werden heute meisten einfache Verfahren in der Praxis eingesetzt, z.B. das Push-Prozessverfahren gesteuert durch ein "Dock und Yard Management (DYM) System" oder eine Behälterzuführung zur Eingabestation eines Paketsorters. Beim Einsatz von Roll-Container(RC) für den Transport der Sendungen wird ein RC an dem Tor aus dem LKW entladen, und dann manuell zu einem Feeder/Eingabestation eines Sorters gebracht. Im Rahmen dieses Verfahrens wird nur ein Ziel gesetzt, nämlich alle Eingangsstellen, z.B. Endladetore oder Eingabestationen gleichmäßig auszulasten. Im DYM, z.B. sucht ein Hofdisponent, manuell und z.B. auch teilweise IT-unterstützt, nach verfügbaren Endladetoren für die Entladung ankommender Transportbehälter und/oder Transportern ohne ausreichende Berücksichtigung der Sendungsmerkmale unter erfahrungsgestützter Einbeziehung des geschätzten aktuellen innerbetrieblichen Bedarfs.

Dem Push-Prinzip folgend werden ankommende LKW/WB einem Endladetor/Eingabestation geleitet, wenn dieses frei ist, sonst fährt er zu einem zugeordneten Parkplatz und wartet dort auf das nächste freie Tor. Ähnliches geschieht auch für die Behälterzuführung zur Eingabestation eines Paketsorters, wobei ein ankommender Vollbehälter meisten zu der Eingabestation mit weniger warteten Behältern zugeordnet wird.

Heute werden wertvolle Sendungsmerkmale noch nicht für die aktive Prozessplanung und -Steuerung herangezogen, sondern hauptsächlich für Prozessqualitätsanalyse (nach Abschluss der Bearbeitung) in einem Zentrum (Hub), z.B. für Tracing & Tracking oder Laufzeitanalysen, verwendet. Auch die Systemdaten im Hub werden zwar über Informationssysteme, wie z.B. SCADA gesammelt und für die Anlagesteuerung, -analyse oder für Statistiken und Servicezwecke eingesetzt, aber es fehlt jegliche Anwendung ihrer aktiven Nutzung für die operative Planung des Sortierprozesses und einer Steuerung hinsichtlich einer ganzheitlichen Nutzwertsteigerung eines Hubs.

Der vorliegenden Erfindung liegt daher die Aufgabe zugrunde, ein Verteil- und Sortierzentrum sowie ein Verfahren zum Betreiben eines derartigen Zentrum anzugeben, bei denen die ankommenden/wartenden Transportbehälter oder Transporter bei der Pull-Entscheidung nach diversen Merkmalen der enthaltenen Sendungen und dem aktuellen innerbetrieblichen (teil dynamische) Bedarf "vorsortiert" und dann zu der Eingangsstelle aufgrund des Vorsortierungsergebnisses entsprechend angefordert werden können (Pull-Prozess).

Bezüglich des Verteil- und Sortierzentrums wird diese Aufgabe erfindungsgemäss durch ein Verteil- und Sortierzentrum für Sortiergut gelöst, umfassend:
a) eine Anzahl von Annahmestellen für Sortiergut;
b) eine Anzahl von Ausgabestellen für Sortiergut;
c) eine Anzahl von Sortieranlagen für die Förderung und Sortierung des an den Annahmestellen angelieferten Sortierguts und für die Abgabe des so sortierten Sortierguts an die Ausgabestellen für das so sortierte Sortiergut;
d) eine Anlagensteuerung, die ein Andocken von Sortiergutquellen an den Annahmestellen und/oder von Sortiergutsenken an den Ausgabestellen in Abhängigkeit von mindestens zwei für den Sortierprozess relevanten Faktoren steuert, wobei für den Sortierprozess relevante Faktoren folgende Daten sind:
   i) Güterspezifische Daten, wie Zustellort, Gewicht, Grösse der Verpackung, Verpackungsart, erforderliche Sortieranlagenart;
   ii) Daten zur Servicequalität für eines oder mehrere Sortierstücke des Sortiergut;
   iii) Daten zu der aktuellen und ggfs. zukünftigen Auslastung der Anzahl von Sortieranlagen;
   iv) Daten zur aktuellen und ggfs. zukünftigen Auslastung der Anzahl von Annahmestellen und/oder Ausgabestellen;
   v) Daten zur Ankunft von Sortiergutquellen und der von den Sortiergutquellen angelieferten Sortierstücke; und
   vi) Daten zur bereitstehenden oder zukünftigen Kapazität von Sortiergutsenken zur Aufnahme von im Zentrum sortierten Sortierstücken.

Bezüglich des Verfahrens wird diese Aufgabe erfindungsgemäss durch ein Verfahren zum Betreiben eines Verteil- und Sortierzentrums für Sortiergut gelöst, welches die folgenden Schritte umfasst:
a) Bereitstellen einer Anzahl von Annahmestellen für Sortiergut;
b) Bereitstellen einer Anzahl von Ausgabestellen für Sortiergut;
c) Bereitstellen einer Anzahl von Sortieranlagen für die Förderung und Sortierung des an den Annahmestellen angelieferten Sortierguts und für die Abgabe des so sortierten Sortierguts an die Ausgabestellen für das so sortierte Sortiergut;
d) Steuern eines Andockens von Sortiergutquellen an den Annahmestellen und/oder von Sortiergutsenken an den Ausgabestellen in Abhängigkeit von mindestens zwei für den Sortierprozess relevanten Faktoren, wobei für den Sortierprozess relevante Faktoren folgende Daten sind:
   i) Güterspezifische Daten, wie Zustellort, Gewicht, Grösse der Verpackung, Verpackungsart, erforderliche Sortieranlagenart;
   ii) Daten zur Servicequalität für eines oder mehrere Sortierstücke des Sortiergut;
   iii) Daten zu der aktuellen und ggfs. zukünftigen Auslastung der Anzahl von Sortieranlagen;
   iv) Daten zur aktuellen und ggfs. zukünftigen Auslastung der Anzahl von Annahmestellen und/oder Ausgabestellen;
   v) Daten zur Ankunft von Sortiergutquellen und der von den Sortiergutquellen angelieferten Sortierstücke; und
   vi) Daten zur bereitstehenden oder zukünftigen Kapazität von Sortiergutsenken zur Aufnahme von im Zentrum sortierten Sortierstücken.

Auf diese Weise ist es möglich statt des bisherigen FIFO-Prinzips (auf Landeseite) oder sogar LIFO-Prinzips (z.B. wegen der Pufferung auf Air-Seite im Hub) die Sendungsbearbeitung nach dem vereinbartem Servicelevel durch eine zeitliche Prioritätssteuerung durchzuführen. Durch die Steuerung der Sendungszuführung auf Basis der Überwachung der Materialmenge vor unterschiedlichen Prozessschritten werden ausreichend Sendungen für alle nachfolgenden Prozesse z.B. repräsentiert durch X Paketsorter, Y Flyersorter, gewährleistet und deren Kapazität optimal genutzt. Durch die Steuerung der Sendungszuführung auf Basis von Vorkalkulationen der Wechselzeitpunkte von Sortiergutquellen (ankommende LKW, Transporter, Transportbehälter und dergleichen) wird die gleiche Wechselung mehrerer Sortiergutquellen an den Annahmestellen, die zu gleichen Förderstrecken zusammengeführt werden, vermieden oder minimiert, wodurch der Einfluss der Wechselung von Transportern und/oder Transportbehältern auf die gesamte Systemleistung minimiert wird. Durch die Steuerung der Sendungszuführung auf Dimensionsinformation der Sendungen in den Sortiergutquellen können die Mischungsverhältnisse der zusammengeführten Sendungen (z.B. auch aus mehreren Annahmestellen) auf der Förderstrecke entsprechend optimiert werden, wodurch die Zuflussintensität auf diesen Förderstrecken harmonisiert werden kann, was zur Erhöhung des effektiven Durchsatz des gesamten Systems durch Vermeidung von Engpass beitragen kann. Durch die Steuerung der Sendungszuführung auf Basis der Sendungszieleinformation der Sendungen in einem Transporter können Schieflasten im angeschlossene Sortiersystem (im Fall einer Konfiguration von Kreisloop mit mehr als einer Eingabestelle und einer Vielzahl von Sortierbereichen) vermieden oder minimiert werden, weil eine optimale Zuordnung der Sortiergutquellen zu einer Annahmestelle den effektiven Durchsatz des gesamtes Systems erhöhen kann.

In einer vorteilhaften Ausgestaltung der vorliegenden Erfindung kann es vorgesehen sein, dass den vorstehenden Faktoren in der Anlagensteuerung in Vergleich zueinander unterschiedliche Entscheidungsgewichte zuweisbar sind. Auf diese Weise ist es daher möglich, auch temporär durch eine Veränderung der Entscheidungsgewichte das vorrangige Sortierziel zu definieren und das Zentrum in diesem Sinne und auf dieses Ziel getrimmt zu betreiben.

Typischerweise kann es daher in vorteilhaften Ausgestaltungen der vorliegenden Erfindung vorgesehen sein, dass:
a) der Faktor der güterspezifischen Daten stärker gewichtet wird, wenn eine gleichmässige Auslastung und/oder Beaufschlagung zumindest eines Teil der Sortieranlagen priorisiert wird, und/oder
b) der Faktor der Daten zur Servicequalität stärker gewichtet wird, wenn eine rechtzeitige Auslieferung zumindest eines Teil des Sortiergutes priorisiert wird, und/oder
c) der Faktor der Daten zu der aktuellen und ggfs. zukünftigen Auslastung der Anzahl von Sortieranlagen stärker gewichtet wird, wenn eine Optimierung der zur Verfügung stehenden Sortierkapazität priorisiert wird, und/oder
d) der Faktor der Daten zur aktuellen und ggfs. zukünftigen Auslastung der Anzahl von Annahmestellen und/oder Ausgabestellen stärker gewichtet wird, wenn eine Vergleichmässigung des Zu- und/oder Abflusses von zumindest einen Teil des Sortierguts priorisiert wird, und/oder
e) der Faktor der Daten zur Ankunft von Sortiergutquellen und der von den Sortiergutquellen angelieferten Sortierstücke stärker gewichtet wird, wenn eine in die Zukunft gerichtete Planung des Sortiervorganges für zumindest einen Teil des Sortierguts priorisiert wird, und/oder
f) der Faktor der Daten zur bereitstehenden oder zukünftigen Kapazität von Sortiergutsenken zur Aufnahme von im Zentrum sortierten Sortierstücken stärker gewichtet wird, wenn der in die Zukunft gerichtete rechtzeitige Abgang von Sortiergutsenken priorisiert wird.

Weitere vorteilhafte Ausgestaltungen der vorliegenden Erfindung können den übrigen abhängigen Ansprüchen entnommen werden.

Bevorzugte Ausführungsformen der Erfindung werden nachfolgend anhand der Figuren beispielsweise näher erläutert. Dabei zeigen:
- Figur 1: schematisch eine Ansicht eines Anliefer- und Ablieferprozesses an einem landseitigen Verteil- und Sortierzentrums;
- Figur 2: schematisch eine Ansicht eines Anliefer- und Ablieferprozesses an einem flughafenseitigen Verteilund Sortierzentrums mit einer Übergabestelle;
- Figur 3: schematisch eine Ansicht eines Anliefer- und Ablieferprozesses auf einem Flugfeld;
- Figur 4: schematisch eine Ansicht eines Anliefer- und Ablieferprozesses auf einem Kreissorter; und
- Figur 5: schematisch einen Ansicht eines aus den Beispielen gemäss den Figuren 1 bis 3 kombinierten Anliefer- und Ablieferprozesses an einem Paketzentrum.

Bevor im Detail auf die Figuren eingegangen wird, sollen noch die nachstehenden einleitenden Erläuterungen zur vorliegenden Erfindung und einigen besonders bevorzugten Ausführungsvarianten gemacht werden.

Die vorliegende Erfindung zum Pull-Prozess für die Sendungszuführung in einem Verteil- und Sortierzentrum (Hubs) setzt massgeblich an der Basis der Anwendung von Production Planning and Control für innerbetriebliche Prozesse (operative Planung, Überwachung und Steuerung) und der Information aus einem sendungsbasierten Managementsystem an. Mit der rasanten technologischen Entwicklung und dem permanenten Marktzuwachs im Paketgeschäft durch den eCommerce ist es heute aber möglich, dass jede im Logistiknetz aufgenommene Sendung seine wichtigen Merkmale, wie z.B. Empfängeradresse, Produkttyp, Grösse, Service Level, in der zu durchlaufenden Prozesskette im Netz sehr früh bereits als Basisdaten im Sendungsmanagementsystem hinterlegt werden. Auch die mögliche Verschachtelung (z.B. welche Sendung sich in welchen Transportbehälter und/oder welcher Transportbehälter sind im welchen Transporter befindet usw.) ist aufgrund der hohen Leistungsfähigkeit der IT-Infrastruktur in derartigen Logistiksystemen heute ein Bestandteil dieser Basisinformation (sortiergutspezifischen Daten).

Unter Einsatz von Production Planning and Control in dem erfindungsgemässen Hub ist es ebenfalls möglich, dass aktuelle Prozesszustände in Echtzeittreue im IT-System rückgemeldet werden. Durch die IT-unterstützte Analyse von Sendungsmerkmalen der Sendungen in Transportbehältern oder Transportern, und auch des aktuellen innerbetrieblichen Prozessbedarfs in einem Hub kann ein Transportbehälter oder Transporter "vorsortiert" und dann der bestgeeignetsten Eingabestelle zugeordnet werden. Dadurch können sowohl vereinbarte Service Level der Sendungen im Behälter oder Transporter als auch die Prozessbedürfnisse in einem Hub bei der Prozesssteuerung stark verbessert berücksichtigt werden.

Zur Lösung des Problems einer Sicherstellung der Bearbeitung einer Sortierstücks nach dem vereinbarten Servicelevel (z.B. zeitliche Priorität der Zustellung) ist es bekannt, dass eine Gefährdung des Servicelevels einer Sendung häufig im Fall einer Verspätung der Transportbehälter- oder Transporter-Ankunft auftritt, weil die Anschlusstransporter (Sortiergutsenken) im Hub planmäßig, d.h. ohne zu warten, abfahren werden. Um die Beeinträchtigung der Verspätung zu minimieren, wird die zeitliche Priorität aller ankommenden und/oder bereits wartenden Sortiergutquellen ermittelt. Da ein ankommender Transporter viele Sendungen mit verschiedenen Zielen zum Hub bringt, die durch unterschiedliche Anschlusstransporter (d.h. in unterschiedliche Abfahrtzeiten) weiter transportiert werden, wird die zeitliche Dringlichkeit der verspäteten Sortiergutquelle, z.B. eines verspäteten LKW's, auf Basis der geladenen Sendungen und deren Merkmale analysiert. Hierzu wird beispielsweise zuerst die Mengenverteilung der Sendungen auf die unterschiedlichen Ziele erstellt. Ferner wird die erlaubte Bearbeitungszeit in Hub (=Abfahrtzeit der Transporter minus aktuellen Zeitpunkt) ermittelt. Danach ist festzustellen, wie viele Sendungen in diesem Transporter innerhalb der minimalen Bearbeitungszeit (z.B. 15 Minuten) bearbeitet werden müssen, damit sie ohne Verspätung weiter transportiert werden können. Die ermittelte dringlich zu bearbeitete Sendungsmenge bildete die "Priorität" dieses Transporters ab, somit wird seine Zuführung zum Endladetor nicht mehr wie herkömmlich nur nach dem FIFO-Prinzip, sondern nach zeitlicher Priorität gesteuert.

Weiter ist es für die Effizienz eines Sortierzentrums besonders vorteilhaft, wenn alle den Annahmestellen nachfolgenden (Sortier-)Systeme, z.B. eine Anzahl von Paketsortern, eine Anzahl von Flyer-Sortern, mit ausreichenden Materialien beaufschlagt sind. Die Logistikprozesskette in einem Pakethub (Verteil- und Sortierzentrum für Pakete) wird wegen der Automatisierung der nachfolgenden Sortierung häufig in folgender Weise so gestaltet, dass unterschiedliche Produkttypen (Pakete, Flyer, NC) aus einem Transportbehälter oder Transporter auf die spezifischen Förderersysteme jeweils an den diesen vorgeordneten Annahmestellen entleert werden. Diese Produkttypen werden dabei über verschiedene separate Prozesspipelines bearbeitet. Ohne entsprechende Steuerung von der Sendungszuführung an den Annahmestellen könnte diese Prozessverkettung dazu führen, dass eine Prozesspipeline in bestimmten Zeitintervallen sehr stark belastet würde, während die anderen Pipelines unter einem Mangel an zu sortierenden Sendungen leiden. Zur Lösung dieses Problems wird die Sendungszuführung unter Berücksichtigung folgender Information gesteuert. Durch die Vorausschau/Überwachung der restlichen Bearbeitungszeit zum Abbau der aktuellen Sendungsmenge vor jeder Anlage/Produktionspipeline (steht im Zusammenhang mit Produkttyp), kann beim Auftritt eines kritischen Zeitpunkts (Vorankündigung eines Materialmangelns) entschieden werden, welche Sortiergutquelle (mit der meisten Menge des erforderlichen sich verknappenden Produkttyps) zuerst entladen wird, damit die gefährdete Produktion der Anlage wieder mit ausreichenden Mengen versorgt werden kann. Hierbei ist die aktuelle Sendungsmenge vor einer Anlage durch alle zur Entladung geschickte, aber noch nicht durch die Anlage bearbeitete Sendungen (mit dem Produkttyp für diese Anlage) gegeben.

Ein weiterer wichtiger Punkt zur optimalen Nutzung des Zentrums besteht in einer Minimierung einer temporären Unterbrechung der Sendungszuführung, die z.B. durch gleichzeitige Wechsel von Sortiergutquellen (LKW, Transporter, Container und dergleichen) an den Annahmestellen (Entlade-Docks oder - Tore) verursacht werden kann. Diese Beeinträchtigung kann durch Vermeidung oder Reduzierung der gleichzeitige Sortiergutquellen-Wechsel an mehreren Annahmestellen, deren Materialströme später zusammen geführt werden, minimiert werden. Es ist zum Beispiel bekannt, dass jeder Transporter-Wechsel an einem Entlade-Dock eine kurze Unterbrechung von Materialversorgung aus diesem Dock bedeutet. In einer Entladungszone kommen die Sendungen auf einer Zuführungsstrecke zum Sorter häufig aus mehreren solcher Entlade-Tore (d.h. die Sendungen aus diesen Docks werden zu einem Fluss zusammengeführt). Würden alle diese Entlade-Docks gleichzeitig zum Beispiel einen LKW-Wechsel machen, dann würde eine totale Unterbrechung der Sendungsversorgung zu dieser Zuführungsstrecke auftreten. Somit ist nun eine Steuerung der an den Annahmestellen andockenden Sortiergutquellen in einer Weise vorgesehen, die Wechsel der Sortiergutquellen in einem Entladebereich zeitlich zu staffeln. Während eines Wechsel einer Sortiergutquelle würde sich dann zwar ein verminderter Sendungsfluss auf dieser Zuführstrecke einstellen; dieser wäre aber immerhin noch ausreichend für weitere Bearbeitung. Diese optimierte Betriebsart mit zeitlich gestaffelter Wechselung auf unterschiedlichen Docks ist somit wichtig für die Sicherstellung des erforderlichen Durchsatzes (mit kontinuierlichem Fluss) der nachfolgenden Sortieranlagen.

Um die Beeinträchtigung des Transporter-Wechsels auf die gesamte Systemleistung zu minimieren, wird der Wechselzeitpunkt jedes Transportbehälters oder Transporters auf Basis der vorhandenen Sendungsmenge und Entleerungsleistung ermittelt. Durch Zuordnung der Sortiergutquellen zu den Annahmestellen und/oder eine Änderung der Entladungsreihenfolge im Pull-Prozess kann gesteuert werden, dass gleichzeitige Sortiergutquellen-Wechsel an mehreren Annahmestellen, deren Materialströme später zusammengeführt werden, im besten Falle ganz ausbleiben.

Ein weiteres wichtiges Kriterium für die Erreichung einer möglichst hohen Effizienz der zur Verfügung stehenden Sortiersysteme und ihrer Zuförderrouten besteht in einer Harmonisierung der Zuflussintensität durch eine optimierte Mischung der Paketgrößen beispielsweise auf einem Förderband. In einer Entladezone ist es nicht selten, dass die Materialströme mehrerer Endladetore über einen Förderband zusammengeführt werden. Ein definierter Durchsatz auf diesen Zusammenführungsstrecken kann nur dann erreicht werden, wenn die Sendungsgrössenverteilung auf dieser Strecke im Sinne von gleichmäßig gemischt harmonisiert ist. D.h. es sollte möglichst vermieden werden, dass einmal mehrere Docks gleichzeitig durch Sortiergutquellen mit vielen eher grossvolumigen Sortiergütern (Entladung führt dann zum Engpass) und ein anderes Mal bei einer Entladung einer Sortiergutquelle mit vielen eher kleinvolumigen Sortiergütern (hier würde dann der dem Förderband nachfolgende Singulator zum Flaschenhals) belastet werden.

Eine wirksame Massnahme besteht darin die Sendungsgrössen der Sortiergutquelle (Transportbehälter oder Transporter, LKW) bei der Sendungszuführung vorher zu analysieren, damit die Transportbehälter oder Transporter mit vielen grösseren Stücken möglichst zu verschiedenen Torbereichen, d.h. unterschiedlichen Zusammenführungsbänden, verteilt werden können. Dadurch kann die definierte Leistung des Förderers und der danach angeschlossenen Sortieranlagen mit höherer Wahrscheinlichkeit erzielt werden.

Ein spezielles Problem kann mit der Verwendung von Kreissortersystemen auftreten, in denen eine Vermeidung oder Minimierung von Schieflasten anzuzielen ist. Ein Kreissorter mit zwei separaten Eingabe- und Sortierbereichen oder eine Kombination von solchen Sortern wird wegen seiner Kostenvorteile häufig in Verteil- und Sortierzentren eingesetzt.

Der effektive Durchsatz dieses Kreissorters hängt jedoch von dem Sortierfaktor ab. Dieser Faktor liegt zwischen 1 und 2, je nachdem wie viele Sendungen direkt durch den eigenen Sortierbereich (dem Sortiermodul direkt hinter der Eingabestation) sortiert werden können. Im eingezogenen Materialstrom mit gleichmäßig gemischten Zielen für die beiden Sortierbereiche ist die gesamte Sortierleistung ca. das 1,33 fache des physikalischen Förderdurchsatzes. Im Fall einer vollständig vorsortierten Sendungsversorgung, d.h. bei eingezogenem Materialstrom mit Zielen nur für den eigenen Sortierbereich für jeden Eingabebereich im Kreissorter erhöht sich die gesamte Sortierleistung bis zum Zweifachen des physikalischen Förderdurchsatzes.

Ein ungünstiges (nicht balanciertes) Mischungsverhältnis im Sendungsstrom, d.h. mehr Sendungen als im vordefinierten Anteil von Sendungen, die durch den anderen Sortierbereich sortiert werden müssen, bestimmt, löst diese "Schieflage" einen Leistungsverlust des Kreissorters aus. Dieser Fall wird auch als "Schieflast" im Kreissorter bezeichnet. Um die definierte Leistung eines Kreissorters zu gewährleisten, ist die Vermeidung und Minimierung dieser Schieflast eine wichtige Aufgabe.

Aufgrund der vorhandenen Sorter-Konfiguration und einem aktiven Sortierplan (welche Ziele werden durch welchen Sortierbereich sortiert) kann bei der Sendungszuführung zum Sorter bereits eine "Vorsortierung" durchführen werdeb, wobei die Zielverteilung der Sendungsmenge in der Sortiergutquelle auf die beiden Sortierbereiche vorher analysiert wird.

Die Sortiergutquelle mit den meisten Sendungen, die über einen Sortierbereich A sortiert werden, wird dementsprechend so gesteuert, dass die Sendungen im direkt davor liegenden Eingabebereich A in den Kreissorter eingeschleust werden, damit sich nur wenige Sendungen mit dem Materialstrom aus dem jeweils anderen Eingabebereich B kreuzen müssen.

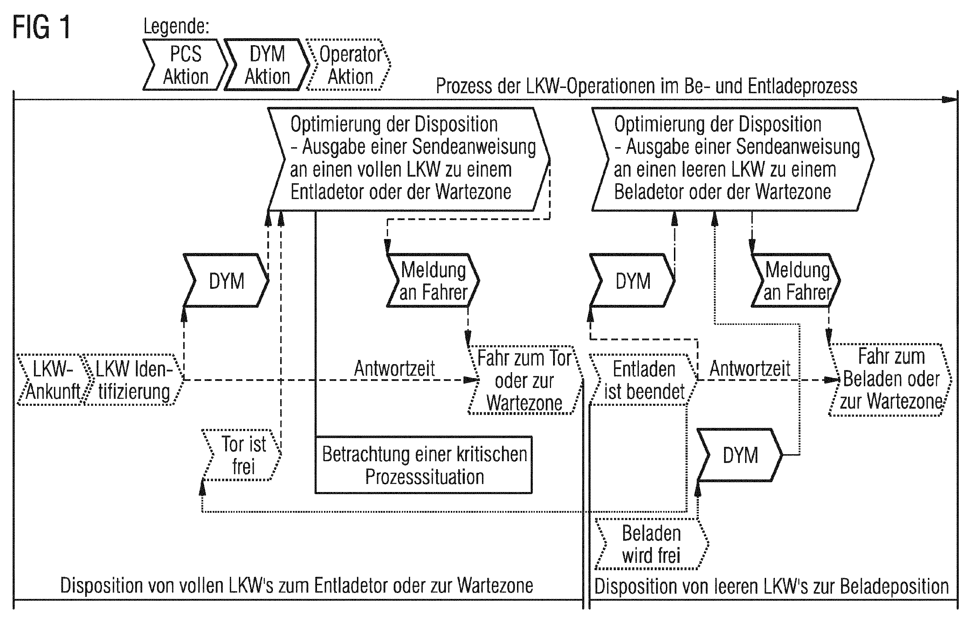

Folgend sind vier Anwendungsbeispiele für Pull-Prozess der Zuführung von Sortiergut. Figur 1 zeigt schematisch ein erstes Beispiel für einen Pull-Prozess in Dock & Yard von einem landseitigen Verteil- und Sortierzentrum. In dieser Darstellung gibt es drei Workflows:
Ein Workflow-Pfad in hellgrau dargestellt zeigt die operative Tätigkeiten (z.B. eines Fahrers eines LKW's), die aus verschiedenen Prozessschritten bestehen. Ein zweiter Workflow-Pfad in dunkelgrau dargestellt zeigt die Sendungszuführung mit Hilfe eines IT-Systems, d.h. Führung der operativen Tätigkeit (z.B. via DYM = Dock&Yard Managementsystem). Ein dritter Workflow-Pfad in Mittelgrau dargestellt zeigt den logischen Ablauf im Production Planning and Control System (das erfindungsgemässe Steuerungssystem) für die Steuerung der Sendungszuführung einer Sortiergutquelle, hier eines Transporters.

Hier wird nun der Pull-Prozess für eine Sendungszuführung vom Volltransporter beschrieben. Nach Ankunft des Transporters am I-Punkt (z.B. Eingangstor des Verteil- und Sortierzentrums) wird die ID des Transporters gescannt. Mit der ID kann das IT-System die aktuelle Position und den Inhalt des Transporters identifizieren. Die Priorität des Transporters wird hier mit Hilfe der folgenden Informationen ermittelt:
- Sendungsserviceklasse (Eilig, Standard,...) und deren Mengen
- Produkttypen (z.B. Paket oder Flyer (in Sack) ....) und deren Mengen
- Sendungsmenge mit definierte Prozesszeit basierend auf aktuellem Zeitpunkt und geplanter Abfahrtzeit eines Anschlusstransporters (Sortiergutsenke)
- Produktgröße-Kategorie (Dimension) und deren Mengen

Aufgrund der Statusmeldung der ankommenden und wartenden Transporter, der Statusmeldung der Eingabestation im Hub und der innerbetrieblichen Bedarfe der Prozesse im Hub kann eine optimale Entscheidung für die Sendungszuführung getroffen werden, damit dem Transporter genau eine Annahmestelle zugewiesen werden kann.

Obwohl der Prozessablauf für einen entleerten Transporter nicht so relevant mit dem Pull-Prozess für die Sendungszuführung ist, wird er in folgender weise kurz erläutert, damit leichter verständlich wird, wie ein Pull-Prozess in Dock & Yard als wichtiger Teil in einer kompletten Lösung, z.B. in Dock&Yard Management, angewendet werden kann. Wurde ein Transporter entleert, wird eine Meldung an das Steuerungssystem geschickt. Ein Dispositionsmodul des Steuerungssystem beginnt sofort, die nächste geeignete Aktion für diesen Transporter zu finden, damit der Fahrer eine Anweisung zu bekommen, wohin er weiter fahren soll (z.B. Parkposition X oder Beladungsdock Y)

Wird ein Beladungsdock bald frei (z.B. detektiert durch eine Überprüfung/Überwachung des Füllungsgrads des Transporters am Dock), wird eine Meldung ebenfalls zum Steuerungssystem geschickt. Das Dispositionsmodul stellt dann fest, welcher leere Transporter nun zu diesem Beladungsdock (Ausgabestelle) kommen soll. Diese Entscheidung/Aufforderung wird von dem Steuerungssystem drahtlos zum Transporter gesendet.

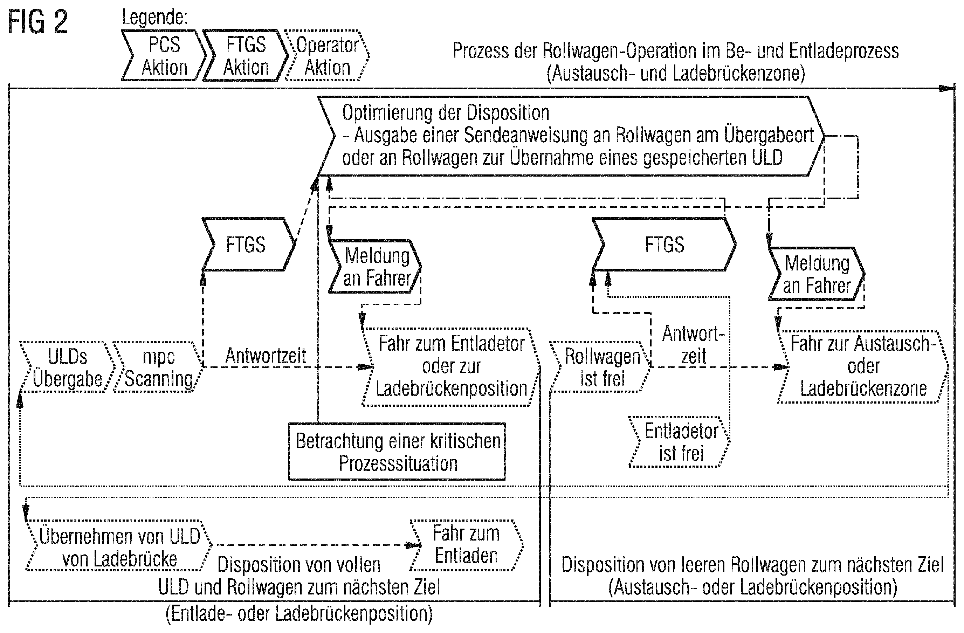

Figur 2 zeigt ein zweites Beispiel für einen Air-seitigen Pull-Prozess und beschreibt im Detail den Pull-Prozess für die Sendungszuführung von Sendungen in Transportbehältern. Nach Übergabe einer Sortiergutquelle, hier eines Transportbehälters (ULDs/ Palette/Rollwagen), an einen Hub-Mitarbeiter (Fahrer) am Eingangspunkt, auch I-Punkt (Tor) genannt, wird die ID des Transportbehälters oder einer Sendung im Transportbehälter von diesem Mitarbeiter gescannt. Damit kann das IT-System (Steuerungssystem) die aktuelle Position und Inhalt dieses Behälters identifizieren.

Die Priorität des Behälters kann mit Hilfe folgender Information wie bereits vorstehend ermittelt werden:
- Service Klasse der Sendungen (Eilig oder Standard) und deren Menge
- Produkttypen (z.B. Paket oder Flyer (in Sack) oder ....) und deren Menge
- Sendungsmenge mit definierte Prozesszeit, d.h. die Zeit, die verbleibt um die Sendungen für ein Ziel zu bearbeiten, basierend auf dem aktuellen Zeitpunkt und der geplanten frühesten Abfahrtzeit eines Anschlusstransporters.
- Produktgröße-Kategorie (Dimension) und deren Mengen

Aufgrund des Inhaltes der Statusmeldungen der ankommenden und wartenden Transportbehälter, der Statusmeldung der Eingabestation im Hub, des Status der Transporter (Dolly / Gabelstapler / Rangierwagen / Zugmaschine) auf dem Areal (Yard) des Verteil- und Sortierzentrums (Hub) und der innerbetrieblichen Bedürfnisse der Sortierprozesse im Hub kann eine optimale Entscheidung für Sendungszuführung getroffen werden. Hieraus wird wieder die Information für den eigentlichen Pull-Prozess generiert, die einen Fahrer anweist, an welche Annahmestelle (Dock) er diesen Behälter transportieren soll.

Ist ein Transporter im Yard frei, wird eine Meldung zu dem IT-gestützten Steuerungssystem für die Item-Zuführung gesendet, zum Beispiel via Transporter-Leitsystem (FTGS). Das Dispositionsmodul beginnt sofort, den nächsten geeigneten Auftrag für diesen geleerten Transporter zu finden, damit der Fahrer eine Anweisung bekommt, wohin er weiter fahren soll (zur Behälter-Übergabestelle am I-Punkt, zur Zwischenspeicher Stelle oder zum Abtransport des geleerten Transportbehälters). Ist ein Transportbehälter am Entladungsdock frei (z.B. detektiert durch einen Scan-Vorgang am Dock), wird eine Meldung für das Wegschaffen der geleerten Transportbehälters an das Steuerungssystem geschickt. Das Dispositionsmodul stellt dann fest, welcher geeignete Transporter hierher kommen soll um den geleerten Transportbehälter abzuführen. Anschliessend wird diese Entscheidung an den Operator eines entsprechend verfügbaren Transporters übertragen.

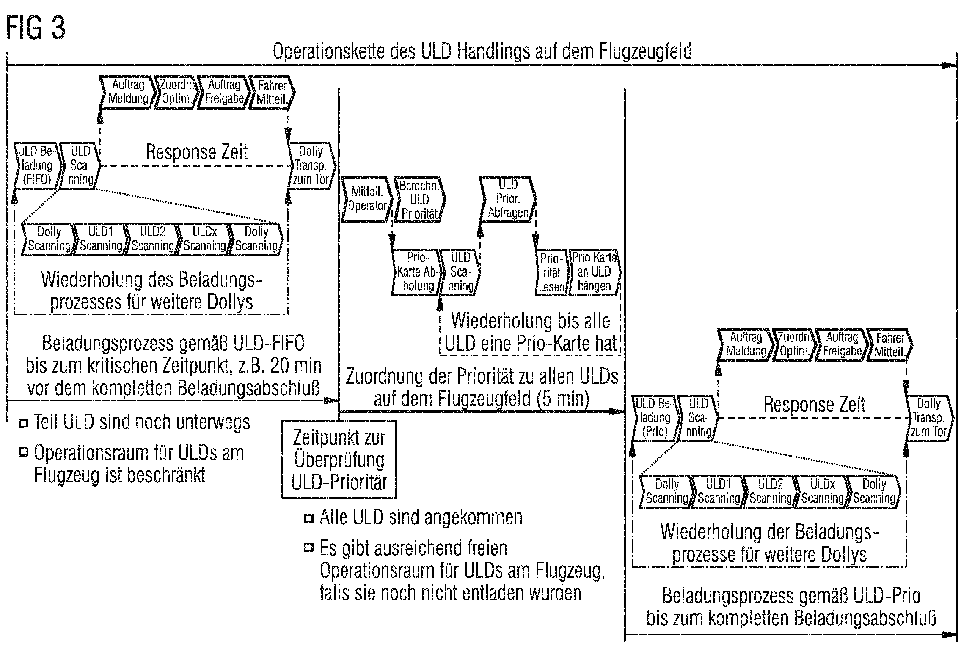

Figur 3 zeigt nun ein drittes Beispiel für einen Pull-Prozess zur Realisierung einer optimierten Sendungszuführung in einem Air-Pakethub. Heutzutage bestehen häufig hohe Anforderungen an die Sortierleistung in dem Air-Pakethub, weil die zur Verfügung stehende Bearbeitungszeit für die Sortierung der Pakete zwischen dem ersten wieder abfliegenden Flugzeug (Sortiergutsenke) und dem zuletzt landenden Flugzeug (Sortiergutquelle) sehr kurz ist. Ohne Einsatz des erfindungsgemässen Pull-Prozessprinzips müssten alle ankommenden Sendungen theoretisch vor dem ersten frühesten Abflug fertig sortiert sein, obwohl die restlichen Flüge erst später starten, weil ansonsten eine Servicelevel-Verletzung von Sendungen (speziell der zum ersten Abflug transportierten Sendungen) auftreten könnte. Dies führt ausserdem dazu, dass wertvolle Sortierkapazität nach dem ersten Abflug nicht mehr ausreichend ausgenutzt wird.

Um diesen Konflikt zwischen Service Level und Ausnutzung der Sortierkapazität zu umgehen, stellt der Pull-Prozess via IT-unterstützte Auftragsfreigabe, Disposition von Transportbehältern auf dem Flugfeld eine Verbesserung dar. Die Grundansätze sind dabei folgende:
Solange die minimale restliche Bearbeitungszeit im Hub noch nicht kritisch ist, folgt die ULD Beladungsreihenfolge auf dem Flugfeld, wie bisher, dem FIFO Prinzip. Die Zuordnung eines Auftrags (ULD) zum Feeder von Paketsorter ist gleichmäßig und zufällig, d.h. per Augenschein ohne IT-Unterstützung. In diesem Fall hat die gleichmäßige Auslastung aller Eingabebereichen höhere Priorität, z.B. wenn der Zeitunterschied zur Bearbeitung des restlichen Sendungsbestands zwischen den unterschiedlichen Eingabebereichen mehr als 10 Minuten dauert, wird der Auftrag mit den meisten Sendungen direkt zu dem Bereich mit der kürzesten Sendungswarteschlage zugeordnet.

Ist der vordefinierte kritische Zeitpunkt gekommen (z.B. 30 Minuten vor Schlusszeit im Hub), wird eine Priorität nach Mengenverteilung auf die Abflugzeiten festgelegt. Die Prioritäten werden den ULDs auf dem Flugfeld zugewiesen. Danach werden die ULDs nur nach dieser Priorität auf Dollies verladen. Anschließend wird die Zuordnung eines Auftrags (ULD) zur Eingabestation unter Berücksichtigung der Mengenverteilung auf den Zielen in den ULDs durchgeführt (auch die Minimierung des Schieflasts im Sortiersystem könnte hier in Betracht bezogen werden, falls das Sortiersystem aus einem oder mehreren Kreisloop mit mehr als einer Eingabe und Sortierbereichen je Loop besteht).

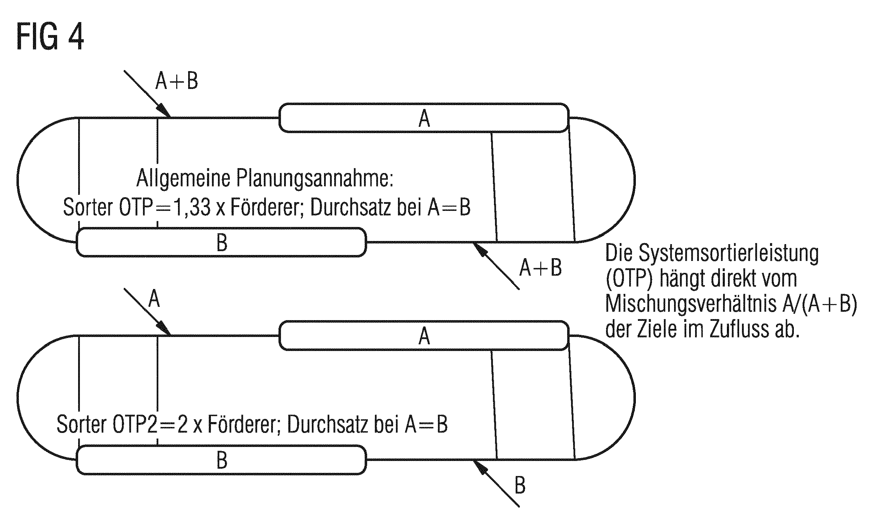

Figur 4 zeigt schematisch ein viertes Beispiel für einen Pull-Prozess vor der Eingabestation eines Kreissorters, um die effektive Leistung des Kreissorters zu erhöhen. Wie vorstehend erwähnt, wird ein Kreissorter mit zwei separaten Eingabestellen und zwei Sortierbereichen oder ein System aus deren Kombination wegen seiner Kosteneffizienz häufig in Pakethubs eingesetzt. Der effektive Durchsatz dieses Sorters hängt sich jedoch von dem Sortierfaktor ab. Und dieser Faktor hängt wiederum direkt von der Zielverteilung der Sendungsmenge, die durch die Eingabestation ins System eingezogen wird, ab.

Aufgrund der vorhandenen Sorter-Konfiguration und dem aktiven Sortierplan, der vorgibt, welche Ziele durch welchen Sortierbereich sortiert werden, kann durch den Einsatz des Pull-Prozesskonzepts eine Verbesserung herbeigeführt werden. Die Sendungen in den Transportbehältern werden aufgrund ihrer Zielverteilung durch eine Analyse der Zielverteilungen der Sendungen im Transportbehälter auf die geeigneteste Eingabestation zugewiesen. Der Transportbehälter mit den meisten Sendungen, die über den Sortierbereich A sortiert werden, wird dabei dem Eingabebereich A zugewiesen. Somit werden sich weniger Sendungen mit dem Materialstrom aus dem anderen Eingabebereich (B) kreuzen, und damit wird der Sortierfaktor des Sortiersystems erhöht.

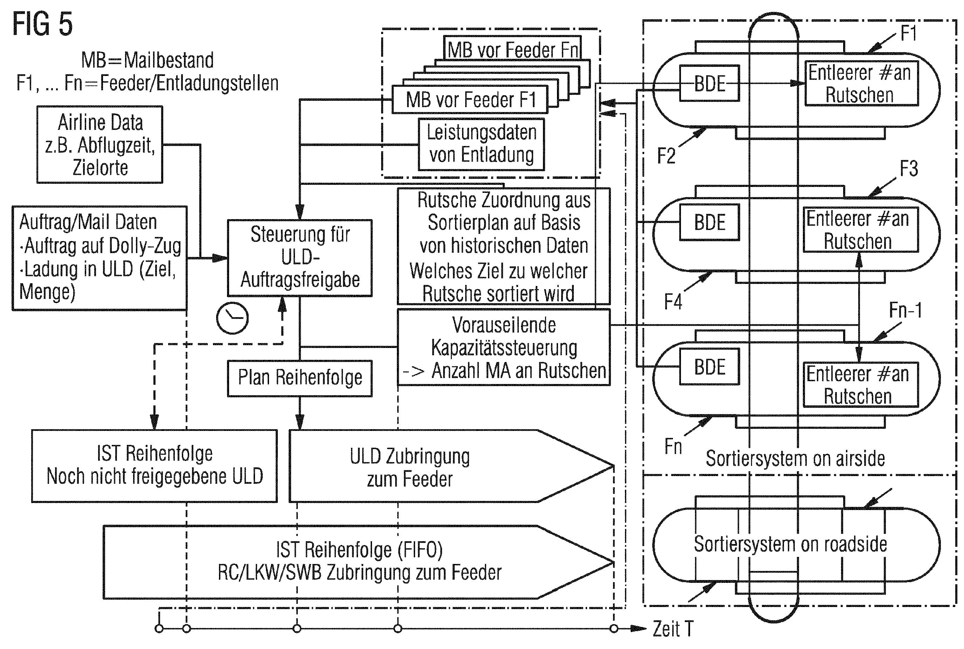

Die Figur 5 zeigt nun schematisch ein Prozessmodell für einen Pull-Prozess, der aus einer Kombination mehrerer der vorstehend erwähnten Beispiele bestehen kann.

Die oben erwähnten Beispiele können sowohl in einzeln als auch in einem kombinierten Prozessmodell angewendet werden. Der folgende Anwendungsfall kombiniert die Beispiele 3 und 4. Auf dem Flugfeld wird durch Anwendung des Pull-Prozessprinzip eine zeitliche Priorität für die Auftrag-Freigabe (Beispiel 3) angewendet. Beim Transport von einer Flugzeugparkposition zu einer Eingabestation des Sortiersystems in Hub wird das Pull-Prozessprinzip zur Minimierung der Schieflasten (Beispiel 4) angewendet.

## Patentansprüche

1. Verteil- und Sortierzentrum für Sortiergut, umfassend:
a) eine Anzahl von Annahmestellen für Sortiergut;
b) eine Anzahl von Ausgabestellen für Sortiergut;
c) eine Anzahl von Sortieranlagen für die Förderung und Sortierung des an den Annahmestellen angelieferten Sortierguts und für die Abgabe des so sortierten Sortierguts an die Ausgabestellen für das so sortierte Sortiergut;
d) eine Anlagensteuerung, die ein Andocken von Sortiergutquellen an den Annahmestellen und/oder von Sortiergutsenken an den Ausgabestellen in Abhängigkeit von mindestens zwei für den Sortierprozess relevanten Faktoren steuert, wobei für den Sortierprozess relevante Faktoren folgende Daten sind:
i) Güterspezifische Daten, wie Zustellort, Gewicht, Grösse der Verpackung, Verpackungsart, erforderliche Sortieranlagenart;
ii) Daten zur Servicequalität für eines oder mehrere Sortierstücke des Sortiergut;
iii) Daten zu der aktuellen und ggfs. zukünftigen Auslastung der Anzahl von Sortieranlagen;
iv) Daten zur aktuellen und ggfs. zukünftigen Auslastung der Anzahl von Annahmestellen und/oder Ausgabestellen;
v) Daten zur Ankunft von Sortiergutquellen und der von den Sortiergutquellen angelieferten Sortierstücke; und
vi) Daten zur bereitstehenden oder zukünftigen Kapazität von Sortiergutsenken zur Aufnahme von im Zentrum sortierten Sortierstücken.

2. Verteil- und Sortierzentrum nach Anspruch 1,
**dadurch gekennzeichnet, dass**
den vorstehenden Faktoren in der Anlagensteuerung in Vergleich zueinander unterschiedliche Entscheidungsgewichte zuweisbar sind.

3. Verteil- und Sortierzentrum nach Anspruch 1 oder 2,
**dadurch gekennzeichnet, dass**
der Faktor der güterspezifischen Daten stärker gewichtet wird, wenn eine gleichmässige Auslastung und/oder Beaufschlagung zumindest eines Teil der Sortieranlagen priorisiert wird.

4. Verteil- und Sortierzentrum nach einem der Ansprüche 1 bis 3, **dadurch gekennzeichnet, dass**
der Faktor der Daten zur Servicequalität stärker gewichtet wird, wenn eine rechtzeitige Auslieferung zumindest eines Teil des Sortiergutes priorisiert wird.

5. Verteil- und Sortierzentrum nach einem der Ansprüche 1 bis 4, **dadurch gekennzeichnet, dass**
der Faktor der Daten zu der aktuellen und ggfs. zukünftigen Auslastung der Anzahl von Sortieranlagen stärker gewichtet wird, wenn eine Optimierung der zur Verfügung stehenden Sortierkapazität priorisiert wird.

6. Verteil- und Sortierzentrum nach einem der Ansprüche 1 bis 5, **dadurch gekennzeichnet, dass**
der Faktor der Daten zur aktuellen und ggfs. zukünftigen Auslastung der Anzahl von Annahmestellen und/oder Ausgabestellen stärker gewichtet wird, wenn eine Vergleichmässigung des Zu- und/oder Abflusses von zumindest einen Teil des Sortierguts priorisiert wird.

7. Verteil- und Sortierzentrum nach einem der Ansprüche 1 bis 6, **dadurch gekennzeichnet, dass**
der Faktor der Daten zur Ankunft von Sortiergutquellen und der von den Sortiergutquellen angelieferten Sortierstücke stärker gewichtet wird, wenn eine in die Zukunft gerichtete Planung des Sortiervorganges für zumindest einen Teil des Sortierguts priorisiert wird.

8. Verteil- und Sortierzentrum nach einem der Ansprüche 1 bis 7, **dadurch gekennzeichnet, dass**
der Faktor der Daten zur bereitstehenden oder zukünftigen Kapazität von Sortiergutsenken zur Aufnahme von im Zentrum sortierten Sortierstücken stärker gewichtet wird, wenn der in die Zukunft gerichtete rechtzeitige Abgang von Sortiergutsenken priorisiert wird.

9. Verfahren zum Betreiben eines Verteil- und Sortierzentrums für Sortiergut, umfassend die folgenden Schritte:
a) Bereitstellen einer Anzahl von Annahmestellen für Sortiergut;
b) Bereitstellen einer Anzahl von Ausgabestellen für Sortiergut;
c) Bereitstellen einer Anzahl von Sortieranlagen für die Förderung und Sortierung des an den Annahmestellen angelieferten Sortierguts und für die Abgabe des so sortierten Sortierguts an die Ausgabestellen für das so sortierte Sortiergut;
d) Steuern eines Andockens von Sortiergutquellen an den Annahmestellen und/oder von Sortiergutsenken an den Ausgabestellen in Abhängigkeit von mindestens zwei für den Sortierprozess relevanten Faktoren, wobei für den Sortierprozess relevante Faktoren folgende Daten sind:
i) Güterspezifische Daten, wie Zustellort, Gewicht, Grösse der Verpackung, Verpackungsart, erforderliche Sortieranlagenart;
ii) Daten zur Servicequalität für eines oder mehrere Sortierstücke des Sortiergut;
iii) Daten zu der aktuellen und ggfs. zukünftigen Auslastung der Anzahl von Sortieranlagen;
iv) Daten zur aktuellen und ggfs. zukünftigen Auslastung der Anzahl von Annahmestellen und/oder Ausgabestellen;
v) Daten zur Ankunft von Sortiergutquellen und der von den Sortiergutquellen angelieferten Sortierstücke; und
vi) Daten zur bereitstehenden oder zukünftigen Kapazität von Sortiergutsenken zur Aufnahme von im Zentrum sortierten Sortierstücken.

10. Verfahren nach Anspruch 9,
**dadurch gekennzeichnet, dass**
den vorstehenden Faktoren in Vergleich zueinander unterschiedliche Entscheidungsgewichte zugewiesen werden.

11. Verfahren nach Anspruch 9 oder 10,
**dadurch gekennzeichnet, dass**
der Faktor der güterspezifischen Daten stärker gewichtet wird, wenn eine gleichmässige Auslastung und/oder Beaufschlagung zumindest eines Teil der Sortieranlagen priorisiert wird.

12. Verfahren nach einem der Ansprüche 9 bis 11, **dadurch gekennzeichnet, dass**
der Faktor der Daten zur Servicequalität stärker gewichtet wird, wenn eine rechtzeitige Auslieferung zumindest eines Teil des Sortiergutes priorisiert wird.

13. Verfahren nach einem der Ansprüche 9 bis 12, **dadurch gekennzeichnet, dass**
der Faktor der Daten zu der aktuellen und ggfs. zukünftigen Auslastung der Anzahl von Sortieranlagen stärker gewichtet wird, wenn eine Optimierung der zur Verfügung stehenden Sortierkapazität priorisiert wird.

14. Verfahren nach einem der Ansprüche 9 bis 13, **dadurch gekennzeichnet, dass**
der Faktor der Daten zur aktuellen und ggfs. zukünftigen Auslastung der Anzahl von Annahmestellen und/oder Ausgabestellen stärker gewichtet wird, wenn eine Vergleichmässigung des Zu- und/oder Abflusses von zumindest einem Teil des Sortierguts priorisiert wird.

15. Verfahren nach einem der Ansprüche 9 bis 14, **dadurch gekennzeichnet, dass**
der Faktor der Daten zur Ankunft von Sortiergutquellen und der von den Sortiergutquellen angelieferten Sortierstücke stärker gewichtet wird, wenn eine in die Zukunft gerichtete Planung des Sortiervorganges für zumindest einen Teil des Sortierguts priorisiert wird.

16. Verfahren nach einem der Ansprüche 9 bis 15, **dadurch gekennzeichnet, dass**
der Faktor der Daten zur bereitstehenden oder zukünftigen Kapazität von Sortiergutsenken zur Aufnahme von im Zentrum sortierten Sortierstücken stärker gewichtet wird, wenn der in die Zukunft gerichtete rechtzeitige Abgang von Sortiergutsenken priorisiert wird.
